# EUROPÄISCHE PATENTANMELDUNG

(11) **EP 2 189 510 A1**
(43) Veröffentlichungstag der Anmeldung: **26.05.2010**
(21) Anmeldenummer: 08169562.9
(22) Anmeldetag: 20.11.2008
(51) Int. Cl.: C09K 17/00, C08F 18/04, C08F 20/18

(54) **Bodenfestiger**

(71) Anmelder: Brink, Gerhard, 84489 Burghausen (DE)
(72) Erfinder: Brink, Gerhard, 84489 Burghausen (DE)
(74) Vertreter: Hofstetter, Alfons J.

(57) **Zusammenfassung**

Die vorliegende Erfindung betrifft einen Bodenfestiger mit feuchtigkeitsspeichemder Wirkung umfassend mindestens ein gel-bildendendes Polymer, wobei das gel-bildende Polymer auf Alkenylester-Copolymerisaten basiert und die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel 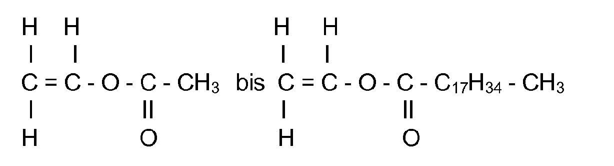 und 0,1 bis 1,0%, bezogen auf das Gewicht aller eingesetzten Monomere, doppelt oder mehrfach ungesättigte Verbindungen als Vernetzungsmittel enthalten.

## Beschreibung

Die vorliegende Erfindung betrifft einen Bodenfestiger mit feuchtigkeitsspeichernder Wirkung umfassend mindestens ein gel-bildendendes Polymer.

Verfahren zur Herstellung von so genannten Bodenfestigern, die bei dem Aufbringen auf die Erdbodenoberfläche eine Verfestigung und Verkrustung der oberen Bodenschicht bewirken sind zum Beispiel aus der DE-A1-19843283 und der DE-A1-19634048 bekannt. Des Weiteren sind Bodenfestiger mit feuchtigkeitsspeichernder Wirkung bekannt und werden für den Landschaftsbau bereits angeboten. Die bekannten Bodenfestiger weisen filmbildende Polymere und so genannte Superabsorbents auf, die jedoch beide nicht biologisch abbaubar sind. Auch aus der Natur sind gel-bildende Polymere bekannt, z. B. Pektinate, Alginate oder Agarose und andere sowie auch Umsetzungsprodukte von natürlichen Polymeren, z. B. Derivate diverser Kohlehydrate sowie von Proteinen. Der Nachteil natürlicher Polymere ist die häufig zu schnelle Zersetzung durch Mikroorganismen, ihre je nach Herkunft und Ernte schwankenden Eigenschaften und die durch unterschiedliche Verfügbarkeit wechselnden Preise. Es sind auch gel-bildende synthetische Polymere auf der Basis von Acrylsäure und hauptsächlich aus Acrylsäure bestehenden Derivaten sowie auf der Basis von Polyethylen- bzw. Polypropylenglykol bekannt. Nachteilig an allen bekannten Bodenfestigern ist jedoch ihre geringe oder nicht gegebene biologische Abbaufähigkeit sowie die zu geringe Feuchtigkeitsaufnahme und -speicherung.

Es ist daher Aufgabe der vorliegenden Erfindung, einen Bodenfestiger mit feuchtigkeitsspeichernder Wirkung bereitzustellen, der eine Verfestigung der zu behandelnden Böden bewirkt, eine hohe Menge an Feuchtigkeit aufnehmen und speichern kann und zudem biologisch abbaubar ist.

Zur Lösung dieser Aufgabe dient ein Bodenfestiger mit den Merkmalen des Anspruchs 1.

Vorteilhafte Ausgestaltungen sind in den Unteransprüchen beschrieben.

Überraschenderweise konnte die Aufgaben mit der Entwicklung und Herstellung eines Bodenfestigers mit feuchtigkeitsspeichernder Wirkung umfassend mindestens ein gel-bildendendes Polymer auf Basis von Alkenylester-Copolymerisaten, wie sie in der EP 0 950 673 B1 beschrieben sind, gelöst werden. Die Alkenylester-Copolymerisate enthalten dabei ein oder mehrere Monomere aus der Gruppe der Alkenylester von unverzweigten oder verzweigten Alkylcarbonsäuren mit 1 bis 18 C-Atomen gemäß der Formel 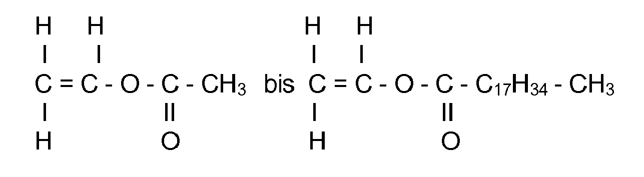 und 0,1 bis 1,0%, bezogen auf das Gewicht aller eingesetzten Monomere, doppelt oder mehrfach ungesättigte Verbindungen als Vernetzungsmittel. Das Vernetzungsmittel bewirkt eine Vernetzung des an sich wasserlöslichen Polymeren. Der resultierende erfindungsgemäße Bodenfestiger vereint die filmbildende Wirkung zur Festigung des Bodens bzw. der Bodenkrume und der Haftung von zum Beispiel einer Aussaat mit einer deutlich erhöhten feuchtigkeisaufnehmenden und -speichernden Wirkung, um zum Beispiel Wasser aus Taubildung oder Niederschlägen, besonders in ariden Gebieten, länger im Boden zuhalten und damit Keimung und Wachsen der Aussaat zu fördern. Zudem ist der Bodenfestiger biologisch abbaubar. Die Anwendungslösung des gel-bildenden Polymers weist üblicherweise einen pH-Wert zwischen 6,0 und 9,0 auf.

Des Weitem können die Alkenylester-Copolymerisate des gel-bildenden Polymers des Bodenfestigers ethylenisch ungesättigte Mono- und/oder Di-Carbonsäuren mit 3 bis 11 C-Atomen oder Teilester von Poly-Carbonsäuren mit Alkoholen zwischen 1 und 18 C-Atomen und/oder Teilester von gesättigten Polycarbonsäuren mit ethylenisch ungesättigten mit mindestens 3 C-Atomen sowie stabilisierend wirkende Comonomere, wie z. B. Ethenylsulfonat, Acrylsäure, Acrylamid, N-Methylolacrylamid oder Crotonsäureamid enthalten. Die Copolymerisate können auch ethylenisch ungesättigte Protonen-Akzeptoren, z. B. Amino-Gruppen, enthalten, die sauer reagierende Substanzen besonders gut binden können. Für die Polymerisation werden außerdem 0,1 bis 15%, berechnet auf den Feststoffgehalt der fertigen Dispersion oder Suspension, eines wasserlöslichen, biologisch verträglichen Polymeren als Schutzkolloid und gegebenenfalls bis zu 10%, bezogen auf das Gewicht aller eingesetzten Monomeren, ebenfalls biologisch verträglicher Emulgatoren verwendet. Die Schutzkolloide sind dabei Polyvinylalkohole mit einem Verseifungsgrad von 70 bis 97 Mol% und/oder wasserlösliche Cellulosederivate, die durch Carboxymethylierung, Carboxypropylierung, Hydroxypropylierung, Hydroxyethylierung oder Veretherung mit Methylgruppen hergestellt wurden und/oder Dextrane und/oder Polyacrylsäuren und Derivate, Polyacrylamid, wasserlösliche Polyacrylsäure- und Polyacrylamid-Copolymerisate und/oder Gelatine und/oder Kasein und/oder chemisch modifizierte Stärken.

Die biologisch verträglichen, anionischen Emulgatoren sind Alkylsulfite mit bis zu 18 C-Atomen im Alkylrest und/oder ALkylarylpolyethersulfonate mit 6 bis 18 C-Atomen im Alkylrest und mit bis zu 40 Ethylen- oder Propylen-Einheiten und/oder Alkylpolyethersulfate mit 6 bis 18 C-Atomen im Alkylrest und/oder Alkyl- oder Alkylarylsulfonate mit 6 bis 18 C-Atomen und/oder Ester und Halbester der Sulfobernsteinsäure mit einwertigen Alkoholen oder Alkylphenolen sowie Kokosmonoglyceridsulfat, welches besonders umweltverträglich ist.

Die Alkenylester-Copolymerisate können auch zwei- oder mehrsäurige Basen, z.B. Magnesiumoxid oder Zinkoxid als Vernetzungsmittel enthalten.

Besonders wirksam als Emulgatoren haben sich Alkylpolyglycoside und Polyglucosid-Fettalkohol-Verbindungen gezeigt.

Des Weiteren können die Alkenylester-Copolymerisate nicht-ionische Tenside, wie z. B. Alkylpolyglykolether oder Alkylarylpolyglykolether mit bis zu 40 Glykoleinheiten enthalten.

Es hat sich herausgestellt, dass die Copolymere besonders gut polare Flüssigkeiten absorbieren, wenn als Alkenylester Alkenylacetat sowie als ethylenisch ungesättigte Carbonsäure, Crotonsäure sowie Hydroxyethyl-Cellulose und/oder Polyvinylalkohol als Schutzkolloid eingesetzt werden. Je nach den copolymerisierten sauren oder basischen Hilfsmonomeren ist die Menge der aufgenommenen polaren Flüssigkeiten über den pH-Wert steuerbar.

Die Herstellung der für den erfindungsgemäßen Bodenfestiger verwendeten gel-bildenden Polymere auf Basis von Alkenylester-Copolymerisaten erfolgt üblicherweise mittels eines Suspensions- oder Dispersions-Polymerisationsverfahrens. Im Einzelnen kann das Herstellungsverfahren folgende Schritte umfassen:
I. Lösung von einem oder mehreren Schutzkolloiden in einer wässrigen Phase in einem Reaktionsgefäß;
II. Spülung eines über der wässrigen Phase verbleibenden Luftraums mit Stickstoff;
III. Einbringen eines ersten Teils eines Monomerengemisches bestehend aus Monomeren der Gruppe der Alkenylester von unverzweigten oder verzweigten Alkylcarbonsäuren mit 1 bis 18 C-Atomen gemäß der Formel 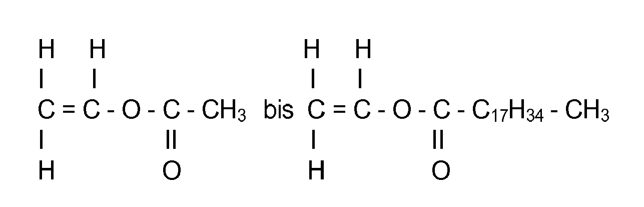 und/oder (Meth)-acrylsäurealkylester mit 3 bis 18 C-Atomen im Alkylrest und ethylenisch ungesättigte Mono- und/oder Di-Carbonsäuren mit 3 bis 11 C-Atomen und/oder Teilester von Poly-Carbonsäuren mit Alkoholen zwischen 1 und 18 C-Atomen und/oder Teilester von gesättigten Polycarbonsäuren mit ethylenisch ungesättigten und mindestens 3 C-Atome aufweisenden, stabilisierend wirkenden Comonomeren sowie einer äquivalenten Menge eines oder mehrerer Vernetzungsmittel als Polymerisationskatalysator in die wässrige Phase und Erwärmen des Gemisches auf 40 bis 70°C;
IV. Zugabe eines Reduktionsmittels bei einer Temperatur zwischen 50 und 55°C;
V. Weitere Erwärmung der Temperatur im Reaktionsgefäß und Zugabe des restlichen Monomerengemisches gemäß Verfahrensschritt III. bei einer Temperatur von mindestens 65°C.

Zudem können im Verfahrensschritt I. Emulgatoren zugegeben, und in der wässrigen Phase gelöst werden. Zur Verringerung des Rest-Monomeren-Gehaltes kann ein weiterer Verfahrensschritt VI. ausgeführt werden, bei dem eine weitere Temperaturerhöhung im Reaktionsgefäß auf 80 bis 95°C erfolgt. Dabei kann ein weiterer Redox-Katalysator zugegeben werden. Der Verfahrensschritt VI. wird ausgeführt, wenn alle Komponenten des gel-bildenden Polymers zugegeben wurden und die exotherme Reaktion aufgehört hat. Anschließend wird die entstandene Dispersion oder Suspension auf Raumtemperatur abgekühlt. Man erhält Dispersionen oder Suspensionen mit einem Feststoffgehalt von circa 60%. Wird die Polymerisation so gesteuert, dass Verzweigungen und Pfropfungen bei hohem Molekulargewicht entstehen, kann auf die Zugabe von vernetzenden Monomeren in den Verfahrensschritten III. und V. verzichtet werden. Bevorzugterweise wird das Monomerengemisch im Verfahrensschritt III. auf 55 bis 65°C erwärmt, das Monomerengemisch im Verfahrensschritt V. auf 75 bis 85°C.

Der für die Durchführung der Polymerisation günstigste pH-Wert liegt zwischen 2,5 und 10, bevorzugt zwischen 4 und 8, und richtet sich auch nach den eingesetzten sauren oder basisch aktiven Co-Monomeren, um die Wasserlöslichkeit der Copolymerisate während der Polymerisation möglichst niedrig zu halten. Der gewünschte pH-Wert wird durch Säuren, Basen und/oder Puffersalze eingestellt. Zur Molekulargewichtseinstellung werden die für die Polymerisation bekannten Regler in geringen Mengen, wie z. B. Mercaptane, Aldehyde oder Chlorkohlenwasserstoffe verwendet. Wurde das Polymer nach dem Suspensions-Verfahren polymerisiert, so wird die Suspension in üblicher Weise gebrochen, das Serum abgetrennt und das verbleibende Polymerisat schonend und unter Vermeidung von Klumpenbildung getrocknet. Je nach den eingesetzten Co-Monomeren ist die Wahl des richtigen pH-Werts beim Brechen der Suspension besonders wichtig. Wenn für die Polymerisation des Dispersions-Verfahren gewählt wurde, dann kann die Dispersion unter Zugabe von weiterem Schutzkolloid und einem Verblockungs-Verhinderungshilfsmittel in einem Sprühturm, wie er für die Erzeugung von Milchpulver seit langem bekannt ist, im Sprühtrocknungsverfahren getrocknet werden. Die Struktur der sprühgetrockneten, gel-bildenden Co-Polymere ist für die Anwendung zur Absorption polarer Flüssigkeiten wegen der entstehenden großen Oberfläche besonders günstig. Eine offenporige, sehr absorptionsfähige Struktur erhält man auch mit der Wirbelschichttrocknung. Der fertige, trockene Bodenfestiger kann in jedem beliebigen Behälter, auch im Pulver-Silo, gelagert und versandt werden.

Es ist auch möglich, dass unmittelbar vor dem Trocknen, z.B. dem Wirbelschichttrocknen oder dem Sprühtrocknen, der nicht oder wenig vernetzten Suspension oder Dispersion zwei- oder mehrsäurige Basen zur Vernetzung zugegeben werden.

Das Herstellungsverfahren der für den erfindungsgemäßen Bodenfestiger verwendeten gel-bildenden Polymere wird durch folgende Beispiele näher erläutert:

### Beispiel 1:

In einen Polymerisationsreaktor mit Rückflusskühler, drehzahlreguliertem Rührer und beheiz- und kühlbarem Reaktormantel werden 45 Gewichtsteile vollentsalztes Wasser, 1,5 Gewichtsteile Hydroxyethylcellulose, 0,6 Gewichtsteile Laurylethersulfat, 1,4 Gewichtsteile Fettalkoholpolyglucosid und 0,3 Gewichtsteile Fettalkoholpolyglykolether butylverethert sowie 0,4 Gewichtsteile Vinylsulfonat gegeben. Nach gründlichem Spülen des freien Reaktorraumes mit Stickstoff, werden 25 Gewichtsprozent des Monomerengemisches, das aus 50 Gewichtsteilen Ethenylacetat, 1,5 Gewichtsteilen Butylacrylat, 4 Gewichtsteilen Crotonsäure, 0,2 Gewichtsteilen Acrylsäure, 0,2 Gewichtsteilen Acrylamid, 0,08 Gewichtsteilen Diethenylsebacat und 0,4 Gewichtsteilen tert. i-Butylhydroperoxid vorgemischt wurde, in den Reaktor gegeben und das Reaktionsgemisch erwärmt. Bei einer Temperatur zwischen 50 und 55°C wird langsam mit der Zugabe des Reduktionsmittels begonnen, das aus 14 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst wurden, hergestellt wurde. Die Zugabe soll sich etwa über eine Stunde erstrecken. Darauf wird der restliche Teil der Monomermischung ab einer Temperatur von 65°C zugegeben und während der Polymerisation die Temperatur im Reaktor vorsichtig auf ca. 85°C gebracht. Nachdem alle Stoffe zugegeben sind, polymerisiert man noch einundeinhalb bis zwei Stunden bei etwa 80 - 95°C, bevorzugt bei etwa 90°C, unter Zusatz von 0,1 Gewichtsteilen Natriumformaldehydsulfoxylat und vorsichtiger Zugabe von 0,1 Gewichtsteilen tert. i-Butylhydroperoxid nach und kühlt ab. Die Fertigstellung erfolgt wie im Beispiel 2 beschrieben.

### Beispiel 2:

In einen Polymerisationsreaktor mit Rückflusskühler, drehzahlregulierbarem Rührer, Dosiereinrichtungen, Stickstoffeinleitung und beheiz- und kühlbarem Reaktormantel werden 45 Gewichtsteile vollentsalztes Wasser, 2,7 Gewichtsteile Hydroxyethylcellulose, 0,05 Gewichtsprozent eines Alkyl-sulfats und 0,7 Gewichtsteile eines mit durchschnittlich 15 Mol Ethylenoxid veretherten Isotridecylalkohols gegeben. Nach gründlichem Spülen des freien Reaktorraumes mit Stickstoff, werden 22 Gewichtsprozent des Monomergemisches, das aus 41,2 Gewichtsteilen Ethenylacetat, 0,5 Gewichtsteilen Isononanethenylester, 4,6 Gewichtsteilen n-Butyl-acrylat, 6,8 Gewichtsteilen Crotonsäure, 0,05 Gewichtsteilen Diethenylsebacat, 0,4 Gewichtsteilen Acrylsäure, 0,4 Gewichtsteilen Acrylamid und 0,2 Gewichtsteilen tert. i-Butylhydroperoxid vorgemischt wurde, in den Reaktor gegeben und das Reaktionsgemisch erwärmt. Bei einer Temperatur zwischen 50 und 55°C wird langsam mit der Zugabe des Reduktionsmittels begonnen, das aus 15 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst sind, hergestellt wurde. Die Zugabe soll sich etwa über eine Stunde erstrecken. Darauf wird der verbleibende Teil der Monomermischung ab einer Temperatur von etwa 65°C zugegeben, und während der Polymerisation die Temperatur im Reaktor vorsichtig auf 80°± 2°C. Nachdem alle Stoffe zugegeben sind, polymerisiert man noch einundeinhalb bis zwei Stunden bei etwa 80 - 95°C, bevorzugt bei etwa 90°C, nach und kühlt ab. Kennzeichnend für das Verfahren ist die Polymerisation aus wässriger Phase. Besonders gute Ergebnisse erzielt man, wenn nach der Dosierung der Basen und vor der Versprühung ein Statikmischer eingesetzt wird.

### Beispiel 3:

Wie im Beispiel 2 wurde ein Polymerharz der gleichen Zusammensetzung hergestellt, jedoch eine höhermolekulare Hydroxyethylcellulose zugegeben und auf den Zusatz von Emulgatoren verzichtet und während der Polymerisation die Rührgeschwindigkeit erhöht. Dadurch erhält man eine Polymer-Suspension. Durch Erniedrigung des pH-Wertes und Zugabe von Natriumsulfat kann die Suspension gebrochen werden und das anfallende Präzipitat wird von der wässrigen Phase abgetrennt und im Drehrohr- oder im Wirbelschichttrockner vorsichtig getrocknet, so dass das Polymer nicht verblockt. Das Polymer wird wie im Beispiel 2 neutralisiert und man erhält wieder ein voluminöses, gel-bildendes Pulver, das als Bodenfestiger eingesetzt werden kann.

### Beispiel 4:

In einem Polymerisationsreaktor mit Rückflusskühler, drehzahlreguliertem Rührer und beheiz-und kühlbarem Reaktormantel werden 45 Gewichtsteile vollentsalztes Wasser, 1,5 Gewichtsteile Hydroxyethylcellulose, 0,8 Gewichtsteile Laurylethersulfat, 1,4 Gewichtsteile Fettalkoholpolyglucosid und 0,3 Gewichtsteile Fettalkoholpolyglykolether, endgruppenverschlossen, sowie 0,4 Gewichtsteile Vinylsulfonat gegeben. Nach gründlichem Spülen des freien Reaktorraumes mit Stickstoff werden 25 Gewichtsprozent des Monomerengemisches, das aus 50 Gewichtsteilen Ethenylacetat, 1,5 Gewichtsteilen Butylacrylat, 4 Gewichtsteilen Crotonsäure, 0,2 Gewichtsteilen Acrylsäure, 0,2 Gewichtsteilen Acrylamid und 0,4 Gewichtsteilen tert.-i-Butylhydroperoxid vorgemischt wurde, in den Reaktor gegeben und das Reaktionsgemisch auf 50 bis 55°C erwärmt. Nach Erreichen der Temperatur wird langsam mit der Zugabe des Reduktionsmittels begonnen, das aus 14 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst wurden, hergestellt wurde. Die Zugabe soll sich etwa über eine Stunde erstrecken. Darauf wird der restliche Teil der Monomermischung ab einer Temperatur von ca. 65°C zugegeben und während der Polymerisation die Temperatur im Reaktor vorsichtig auf ca. 85°C gebracht. Nachdem alle Stoffe zugegeben sind, polymerisiert man noch einundeinhalb bis zwei Stunden bei etwa 90°C unter Zusatz von 0,1 Gewichtsteilen Natriumformaldehydsulfoxylat und vorsichtiger Zugabe von 0,1 Gewichtsteilen tert.-i-Butylhydroperoxid nach und kühlt ab. Die Fertigstellung erfolgt durch Trocknen der entstandenen Polymerdispersion im Sprühturm oder im Wirbelschichttrockner unter Zudosierung einer Suspension von Magnesiumoxid, die auf einen pH-Wert von 8,5 eingestellt wurde, im stöchiometrischen Verhältnis zur Säurezahl der Polymerdispersion. Es entsteht ein gel-bildendes Polymer, das über Magnesiumoxid vernetzt wurde.

Im Folgenden werden einige Anwendungsbeispiele zur Verfestigung der Bodenoberfläche, zur Begrünung von Bodenflächen sowie der Aussaat von Pflanzensamen und die jeweilige Zusammensetzung des aufzubringenden Materialgemisches näher beschrieben:
Beispiel A: Begrünung einer Böschung, Zusammensetzung des Materialgemisches

| **Material** | **Menge** |
|---|---|
| Sportrasen-Saat | 10-50g/m² |
| Mulch (z.B. Zellulosefasern, Pflanzenmaterial) | 10 - 200 g/m² |
| Bentonit (Dispersion) | 10-300 g/m² |
| Dünger (z.B. Nitrophoska®) | 10-100 g/m² |
| Gel-bildendes Polymer (hergestellt nach einem Verfahren gemäß den Beispielen 1 bis 4) | 10 - 400 g/m² |
| Wasser | Auf 2,5 1 auffüllen |

Beispiel B: Rekultivierung einer Ödfläche, Zusammensetzung des Materialgemisches

| | |
|---|---|
| **Material** | **Menge** |

| Strandhafer-Saat | 10 - 100 g/m² |
|---|---|
| Mulch (z.B. Zellulosefasern, Rindenmulch, Stroh oder anderes Pflanzenmaterial) | 10-200 g/m² |
| Bentonit (Dispersion) | 50 - 300 g/m² |
| Dünger (z.B. Nitrophoska®) | 10 - 100 g/m² |
| Gel-bildendes Polymer (hergestellt nach einem Verfahren gemäß den Beispielen 1 bis 4) | 10 - 400 g/m² |
| Wasser | Auf 2,5 1 auffüllen |

Beispiel C: Neuansaat arider Flächen, Zusammensetzung des Materialgemisches

| **Material** | **Menge** |
|---|---|
| Bermudagras-Saat | 10 - 100 g/m² |
| Mulch (z.B. Zellulosefasern, Rindenmulch, Stroh oder anderes Pflanzenmaterial) | 10 - 200 g/m² |
| Bentonit (Dispersion) | 50 - 300 g/m² |
| Dünger (z.B. Nitrophoska®) | 10 - 100 g/m² |
| Gel-bildendes Polymer (hergestellt nach einem Verfahren gemäß den Beispielen 1 bis 4) | 10-400 g/m² |
| Wasser | Auf 2,5 1 auffüllen |

Bentonit weist pro Gramm eine innere Oberfläche von ca. 400-600 m² auf. Er erhöht damit die Bindung von Wasser und Nährstoffen in dem Materialgemisch. Die Mengen an Zusätzen und die jeweilige Wassermenge richten sich nach der Beschaffenheit des zu behandelnden Bodens, der Wasseraufnahmefähigkeit der Bodenkrume und den klimatischen Bedingungen. Andere Zusätze, wie zum Beispiel umweltverträgliche Farbstoffe können nach Bedarf ebenfalls zugesetzt werden.

Verwendung finden die im Vorhergehenden beschriebenen Bodenfestiger vorteilhafterweise unter anderem bei der Nassaussaat von Pflanzensamen. Es hat sich gezeigt, dass hiermit große Flächen, insbesondere auch Hänge und Böschungen, gleichmäßig angesät werden können, wobei gleichzeitig eine Verfestigung der Bodenoberfläche erfolgt. Durch die deutlich erhöhte feuchtigkeisaufnehmende und -speichernde Wirkung des Bodenfestigers wird die Keimung und das Wachsen der Aussaat erheblich gefördert.

## Patentansprüche

1. Bodenfestiger mit feuchtigkeitsspeichernder Wirkung umfassend mindestens ein gel-bildendendes Polymer, wobei das gel-bildende Polymer auf Alkenylester-Copolymerisaten basiert und die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel 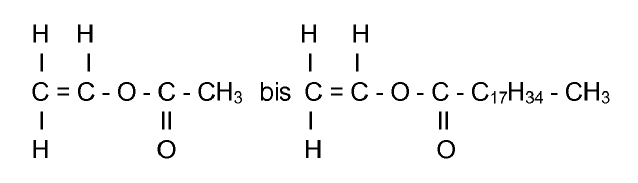 und 0,1 bis 1,0%, bezogen auf das Gewicht aller eingesetzten Monomere, doppelt oder mehrfach ungesättigte Verbindungen als Vernetzungsmittel enthalten.

2. Bodenfestiger nach Anspruch 1,
**dadurch gekennzeichnet,**
**dass** die Anwendungslösung des gel-bildenden Polymers einen pH-Wert zwischen 6,0 und 9,0 aufweist.

3. Bodenfestiger nach einem der vorhergehenden Ansprüche,
**dadurch gekennzeichnet,**
**dass** die Alkenylester-Copolymerisate (Meth)-acrylsäurealkylester mit 3 bis 18 C-Atomen im Alkylrest enthalten.

4. Bodenfestiger nach einem der vorhergehenden Ansprüche,
**dadurch gekennzeichnet,**
**dass** das Vernetzungsmittel Diethenylsebacat, Diethenyladipat, Hexandioldiacrylat, 1,6 Hexandiol, Divinylbenzol oder Hexadien ist.

5. Bodenfestiger nach einem der vorhergehenden Ansprüche,
**dadurch gekennzeichnet,**
**dass** die Alkenylester-Copolymerisate zwei- oder mehrsäurige Basen als Vernetzungsmittel enthalten.

6. Bodenfestiger nach einem der vorhergehenden Ansprüche,
**dadurch gekennzeichnet,**
**dass** die Alkenylester-Copolymerisate ethylenisch ungesättigte Mono- und/oder Di-Carbonsäuren mit 3 bis 11 C-Atomen und/oder Teilester von Poly-Carbonsäuren mit Alkoholen zwischen 1 und 18 C-Atomen und/oder Teilester von gesättigten Polycarbonsäuren mit ethylenisch ungesättigten und mindestens 3 C-Atome aufweisenden, stabilisierend wirkenden Comonomeren enthalten.

7. Bodenfestiger nach Anspruch 6,
**dadurch gekennzeichnet,**
**dass** die ethylenisch ungesättigte Carbonsäure Crotonsäure ist.

8. Bodenfestiger nach Anspruch 6,
**dadurch gekennzeichnet,**
**dass** das stabilisierend wirkende Comonomer Ethenylsulfonat und/oder Acrylsäure und/oder Acrylamid und/oder N-Methylolacrylamid ist.

9. Bodenfestiger nach einem der vorhergehenden Ansprüche,
**dadurch gekennzeichnet,**
**dass** die Alkenylester-Copolymerisate ethylenisch ungesättigte Protonen-Akzeptoren enthalten.

10. Bodenfestiger nach Anspruch 9,
**dadurch gekennzeichnet,**
**dass** die Protonen-Akzeptoren Amino-Gruppen sind.

11. Bodenfestiger nach einem der vorhergehenden Ansprüche,
**dadurch gekennzeichnet,**
**dass** die Alkenylester-Copolymerisate Schutzkolloide enthalten.

12. Bodenfestiger nach Anspruch 11,
**dadurch gekennzeichnet,**
**dass** die Schutzkolloide Polyvinylalkohole mit einem Verseifungsgrad von 70 bis 97 Mol% und/oder wasserlösliche Cellulosederivate, die durch Carboxymethylierung, Carboxypropylierung, Hydroxypropylierung, Hydroxyethylierung oder Veretherung mit Methylgruppen hergestellt wurden und/oder Dextrane und/oder Polyacrylsäuren und Derivate, Polyacrylamid, wasserlösliche Polyacrylsäure- und Polyacrylamid-Copolymerisate und/oder Gelatine und/oder Kasein und/oder chemisch modifizierte Stärken sind.

13. Bodenfestiger nach einem der vorhergehenden Ansprüche,
**dadurch gekennzeichnet,**
**dass** die Alkenylester-Copolymerisate anionische Emulgatoren enthalten.

14. Bodenfestiger nach Anspruch 13,
**dadurch gekennzeichnet,**
**dass** die anionischen Emulgatoren Alkylsulfite mit bis zu 18 C-Atomen im Alkylrest und/oder Alkylarylpolyethersulfonate mit 6 bis 18 C-Atomen im Alkylrest und mit bis zu 40 Ethylen- oder Propylen-Einheiten und/oder Alkylpolyethersulfate mit 6 bis 18 C-Atomen im Alkylrest und/oder Alkyl- oder Alkylarylsulfonate mit 6 bis 18 C-Atomen und/oder Ester und Halbester der Sulfobernsteinsäure mit einwertigen Alkoholen oder Alkylphenolen sind.

15. Bodenfestiger nach einem der vorhergehenden Ansprüche,
**dadurch gekennzeichnet,**
**dass** die Alkenylester-Copolymerisate Alkylpolyglucoside als Polymerisationsemulgatoren enthalten.

16. Bodenfestiger nach einem der vorhergehenden Ansprüche,
**dadurch gekennzeichnet,**
**dass** die Alkenylester-Copolymerisate nichtionische Tenside enthalten.

17. Bodenfestiger nach Anspruch 16,
**dadurch gekennzeichnet,**
**dass** die nichtionischen Tenside Alkylpolyglykolether oder Alkylarylpolyglykolether mit bis zu 40 Glykoleinheiten sind.

18. Verwendung eines Bodenfestigers nach einem der Ansprüche 1 bis 17 zur Nassaussaat von Pflanzensamen.
